# EUROPEAN PATENT SPECIFICATION

(11) **EP 2 077 380 B1**
(45) Date of publication and mention of the grant of the patent: **21.03.2012**
(21) Application number: 08022097.3
(22) Date of filing: 19.12.2008
(51) Int. Cl.: F02D 13/02, F01N 3/023

(54) **Engine system having valve actuated particle filter regeneration**
Ventilgesteuerte Partikelfilter Regenerationsvorrichtung
Système de moteur disposant d'une régénération du filtre à particule à actionnement de soupape

(30) Priority: 04.01.2008 US 7004
(43) Date of publication of application: 08.07.2009
(73) Proprietor: CATERPILLAR INC., Peoria IL 61629-9510 (US)
(72) Inventor: Hu, Jianrong, M., Peoria IL 61629-9510 (US)
(74) Representative: Wagner, Karl H.

(56) References cited:
- WO-A-2005/003536
- DE-A1- 10 002 483
- FR-A- 2 904 051
- US-A- 5 303 686
- US-A1- 2003 084 661

## Description

### Technical Field

The present disclosure is directed to an engine system and, more particularly, to an engine system having valve actuated filter regeneration.

### Background

A fuel and air mixture is combusted within cylinders of an internal combustion engine. Reciprocating pistons are moved between top dead center and bottom dead center positions within the cylinders by a crankshaft of the engine. As each piston moves toward its top dead center position, it compresses the fuel and air mixture. When the compressed mixture combusts, it expands and drives the piston downward toward its bottom dead center position. Combustion within the cylinder releases energy and generates combustion products and by-products, most of which are exhausted from the cylinder into an exhaust system of the engine during an exhaust stroke of the piston. The combustion products and by-products are composed of gaseous compounds (e.g., NOx and HC) and solid particulate matter.

Due to increased attention on the environment, exhaust emission standards have become more stringent, and the amount of gaseous compounds emitted to the atmosphere from an engine may be regulated depending on the type of engine, size of engine, and/or class of engine. One way to reduce the amount of harmful emissions directed to the atmosphere includes reducing the amount of oxygen available for combustion. A reduction in oxygen results in a lower combustion temperature that causes a proportional reduction in NOx generation. In the past, the reduction in oxygen was achieved by delaying the closing of an intake valve at the beginning of a compression stroke of an engine piston. During the ensuing upward stroke of the piston, some of the air drawn into the cylinder during the previous intake stroke was then pushed back out into the intake manifold. Although effective in reducing the amount of oxygen available for combustion, the compressed air being forced back into an intake manifold of the engine interrupted incoming air flow and resulted in a drop in turbocharger efficiency.

Another method used by engine manufacturers to reduce emissions is to trap exhaust particulates with a filter medium (e.g., metal mesh or porous ceramic) and/or convert the gaseous compound to innocuous constituents. Since excessive accumulation of particulate matter on the filter medium will shorten the service life of a particulate trap and increase engine back pressure, the particulate matter must be periodically removed from the medium. The method of removing particulate matter from a particulate trap is known as regeneration. Regeneration involves burning off excessive accumulations of particulate matter. This burning off of particulates requires air to facilitate combustion. Typically, air is provided to the particulate trap by a dedicated air supply, which may be expensive, complex, and may perform with low reliability.

One attempt at improving the process of filter regeneration is described in U.S. Patent No. 6,718,755 (the '755 patent) issued to Brehob on 13 April 2004. The system described by the '755 patent provides for a temperature rise in an exhaust aftertreatment device. During compression, an exhaust valve of the cylinder is opened, releasing an already combined mixture of air and fuel into the exhaust aftertreatment device. The air and fuel mixture contributes to combustion in the aftertreatment device, eliminating particulates in the filter, without the need for a separate dedicated air supply.

Although the system of the '755 patent may improve filter regeneration, its applicability may be limited. That is, it may only be applicable to gasoline or HCCI (homogeneous charge compression ignition) engines having an already combined mixture of air and fuel at the start of the compression stroke. In a standard diesel engine, fuel is not injected or mixed with the air until the end of the compression stroke. As a result, if applied to a diesel engine, the system of the '755 patent would deliver only air to the filter and no regeneration would occur. In addition, because the '755 patent directs both fuel and air to the filter, the engine may experience a loss in power during the regeneration process. The system does nothing to reduce NOx because both air and fuel are being reduced, and not just the air (i.e., the air/fuel ratio is not changing), and NOx reduction requires less air or lower temperature as compared to the fuel during combustion.

WO 2005/003536 discloses an emission control device for a diesel engine which can be retrofitted. In said emission control device, an exhaust valve is opened when the piston approaches a bottom dead center. Exhaust from the exhaust manifold flows backward in the corresponding cylinder, thus providing benefits of exhaust gas recirculation.

DE 100 02 483 discloses a device and a method of heating exhaust treatment devices associated with a spark ignition engine. The spark ignition engine comprises variably controllable intake and exhaust valves. The exhaust valve is opened during the compression stroke for a short time. Opening of the exhaust valve is controlled in top modes a) before fuel injection into the combustion chamber (secondary air induction); and b) after fuel injection into the combustion chamber (controlled afterburning of an air/fuel mixture).

The present disclosure is directed to overcoming one or more of the problems set forth above.

In accordance with the present invention, an engine as set forth in claim 1 and a method as set forth in claim 7 is provided. Preferred embodiments of the invention are claimed in the dependant claims.

### Summary of the Disclosure

In accordance with one aspect, the present disclosure is directed toward an engine. The engine includes an engine block at least partially forming a combustion chamber, and a piston located to reciprocate within the combustion chamber. The engine also includes an exhaust valve fluidly connected to the combustion chamber, and a filter assembly fluidly connected to the exhaust valve. The engine further includes a controller configured to open the exhaust valve during a portion of an intake stroke of the piston and a portion of a compression stroke of the piston to reduce an amount of air available for combustion during an ensuing power stroke, wherein the exhaust valve opens at the end of the intake stroke and closes during a first half of the compression stroke.

According to another aspect, the present disclosure is directed toward, a method for controlling engine emissions. The method includes directing air into a cylinder during an intake stroke. The method also includes releasing a portion of the intake air to an aftertreatment device to reduce an amount of air available for combustion within the cylinder, wherein releasing the portion of the intake air occurs at the end of the intake stroke and ends during a first half of the compression stroke.

### Brief Description of the Drawings

Fig. 1 is a schematic illustration of an exemplary disclosed engine;
Fig. 2 is a diagram of the valve-timing of the disclosed engine; and
Fig. 3 is a diagram of the valve-timing of the disclosed engine.

### Detailed Description

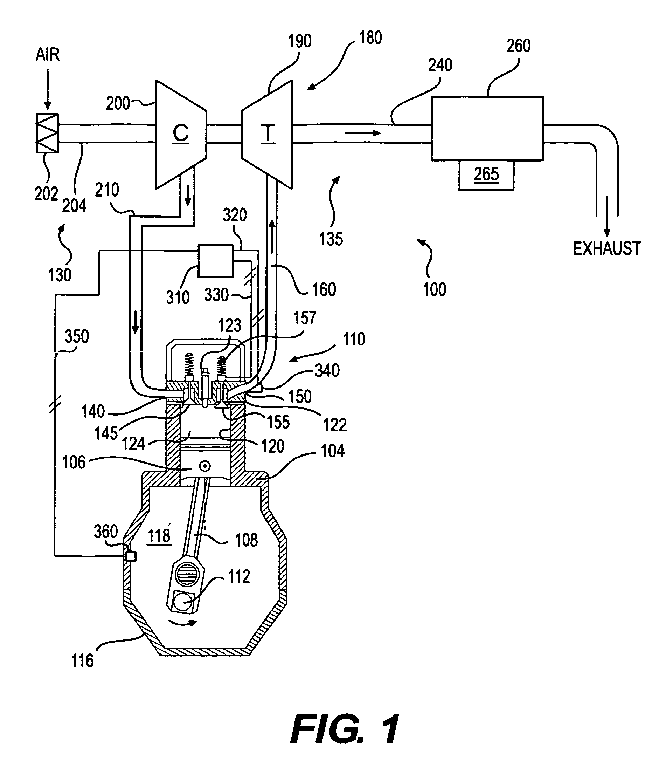

Fig. 1 illustrates an exemplary engine 110 having an emissions reduction system 100. Engine 110 may be any kind of engine, such as a gasoline engine, a compression ignition diesel engine, or a gaseous fuel-powered engine. Engine 110 may include an intake 130 configured to direct air and/or fuel into a plurality of cylinders 120 (only one shown) of engine 110, and an exhaust 135 configured to direct combustion by-products from cylinders 120 to the atmosphere. Engine 110 may be naturally aspirated or may include forced induction via turbocharging or supercharging.

Engine 110 may include an engine block 104 that at least partially defines cylinders 120. Engine 110 may also include a piston 106 slidably disposed within each cylinder 120, and a cylinder head 122 that caps a top of cylinder 120. A combustion chamber 124 may be formed between a top of piston 106, walls of cylinder 120, and a bottom of cylinder head 122. A crankshaft 112 may be rotatably supported within engine block 104 by way of a plurality of journal bearings (not shown). A connecting rod 108 may connect each piston 106 to crankshaft 112 so that a sliding motion of piston 106 within each respective cylinder 120 results in a rotation of crankshaft 112. A fuel injector 123 may be seated within cylinder head 122, serving to inject fuel into combustion chamber 124. An oil pan 116 may be connected to engine block 104 to form a cavity known as a crankcase 118 located below cylinders 120. Lubricant may be provided from oil pan 116 to engine surfaces to minimize metal-on-metal contact and inhibit damage to the surfaces. Oil pan 116 may serve as a sump for collecting and supplying this lubricant.

Intake 130 may include an air filter 202 serving to clean ambient air drawn into engine 110. A conduit 204 may connect air filter 202 to a compressor 200, where compressor 200 may be driven by a turbine 190 located within exhaust 135. Compressor 200 may operate to compress ambient air and deliver the compressed air through a conduit 210 to combustion chamber 124 via an intake manifold 140. The flow of air into combustion chamber 124 may be regulated by an intake valve 145. Intake valve 145 may be seated within cylinder head 122 and may be any suitable type of valve known in the art such as, for example, a poppet valve actuated by a cam. The delivery of compressed air may help to overcome a natural limitation of combustion engines by reducing an area of low pressure within cylinders 120 created by a downward stroke of pistons 106. Therefore, compressor 200 may increase the volumetric efficiency within cylinder 120, and this efficiency may allow more fuel to be burned, resulting in a larger power output from engine 110. Conduit 210 may include a cooler (not shown), if desired. The cooler may serve to cool gases within conduit 210, and, thereby, increase the density of the gases and the amount of air supplied to engine 110. Additionally, the flow of air through conduits 204 and 210 may be controlled by a venturi (not shown) or a throttle valve (not shown), if desired.

Exhaust 135 may include an exhaust valve 155, similar to intake valve 145, which may also be seated within cylinder head 122. Exhaust 135 may further include a first exhaust conduit 160 connecting an exhaust manifold 150 of engine 110 to turbine 190. Turbine 190 may receive exhaust gases from engine 110 through first exhaust conduit 160, causing turbine 190 to rotate. As described above, the rotation of turbine 190 may drive compressor 200, turbine 190 together with compressor 200 forming a turbocharger 180.

A second exhaust conduit 240 may connect turbine 190 to a downstream-located filter assembly 260. Filter assembly 260 may include any suitable filtration media, absorber, reducer, and/or catalytic converter known in the art for reducing the toxicity of emissions from engine 110. Soot carried by exhaust from combustion chamber 124 may collect within filter assembly 260 and require periodic regeneration. Regeneration of the filtration media may include combustion of the trapped soot. Filter assembly 260 may also include a heater 265. Heater 265 may be any suitable heater known in the art such as, for example, a fuel-fired or electric heater, serving to raise the temperature within filter assembly 260 to promote the combustion of soot. An exhaust outlet may connect filter assembly 260 to the atmosphere.

Emissions reduction system 100 may also include a controller 310 in communication with engine 110. Controller 310 may be any type of programmable logic controller known in the art for automating machine processes, such as a switch, a process logic controller, or a digital circuit. Controller 310 may be made from any material known in the art for logic control devices, and may include a protective housing of metal, plastic, or another durable material. Controller 310 may also include input/output arrangements that allow it to be connected to sensors (not shown). The sensors may be situated to monitor various engine parameters, such as ignition timing, fuel opening pressure, crankshaft rotation (crank senior) and cam rotation (cam senior), intake manifold temperature/pressure, cylinder pressure, engine temperature, exhaust manifold temperature/pressure, filter assembly temperature, and exhaust back pressure, if desired.

Controller 310 may be connected by an electrical line 330 to an actuator 157 situated to selectively interrupt the cam-driven motion of exhaust valve 155. Actuator 157 may be any suitable type of actuator known in the art such as, for example, a selectively actuated cam, a hydraulic cylinder actuator, and/or an electromagnetic actuator. Actuator 157 may open, close, or hold stationary exhaust valve 155 in coordination with the movements of piston 106, as described below. Controller 310 may serve to control the movement of exhaust valve 155 based on instructions or algorithms stored in memory, input from sensors, and/or other methods known in the art. Controller 310 may also control the operation of other elements of emissions reduction system 100, for example intake valve 145, injection opening pressure and injection timing, and/or turbine 190.

A sensor 360, configured to measure engine parameters such as, for example, engine speed and engine load, may be associated with engine 110. Sensor 360 may be connected to controller 310 by electrical line 350. A sensor 340 may be configured to measure NOx emissions from engine 110, and may be associated with exhaust manifold 150. Sensor 340 may be connected to controller 310 by electrical line 320.

### Industrial Applicability

The disclosed engine may help to reduce NOx emissions and regenerate filter assembly 260, while maintaining normal combustion. Additionally, the disclosed engine may reduce emissions while improving the efficiency of an associated turbocharger. Operation of engine 110 will now be explained.

During operation of engine 110, pistons 106 may reciprocate within cylinder 120 to produce a rotation of crankshaft 112. Piston 106 may generally follow a four-stroke sequence, moving up and down between a bottom dead center (BDC) position and a top dead center (TDC) position. Piston 106 may be at BDC when it is at its lowest position (i.e., closest to crankshaft 112). Piston 106 may be at TDC when it is at its highest position (i.e., farthest from crankshaft 112). The first stroke of piston 106 may be an intake stroke, during which piston 106 moves downward toward BDC. During this stroke, intake valve 145 may be opened to allow air into combustion chamber 124. The second stroke of the four-stroke sequence may be a compression stroke, during which piston 106 moves upward toward TDC. During this stroke, intake valve 145 and exhaust valve 155 may normally be closed, such that the air drawn into cylinder 120 may be compressed by the movement of piston 106. The third stroke of engine 110 may be a power stroke, during which piston 106 is moved downward toward BDC by combusting gases. During this stroke, both intake valve 145 and exhaust valve 155 may be closed to allow the expanding gases to work against piston 106. The fourth and final stroke may be an exhaust stroke during which piston 106 moves upward toward TDC. During this stroke, exhaust valve 155 may open to allow piston 106 to force exhaust out of combustion chamber 124. The four-stroke operation of engine 110 may be continuously repeated.

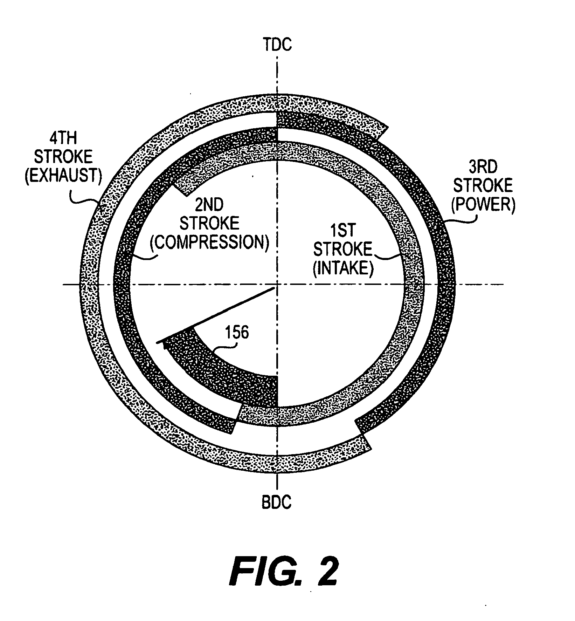

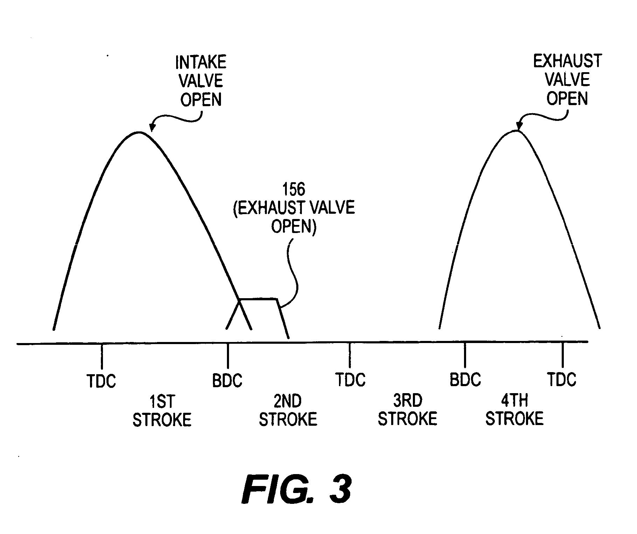

In some situations (e.g., when a reduction in NOx generation is required), it may be necessary to selectively interrupt the normal sequence of strokes described above. If a reduction in NOx is required, controller 310 may actuate exhaust valve 155 to open for a short time (shown as time period 156 in Figs. 2 and 3), starting at the end of the intake stroke, and closing during the compression stroke. Exhaust valve 155 may start to open near the end of the intake stroke, at approximately BDC, and remain open for about 30 to 70 crank angle degrees after BDC during the first half of the compression stroke before closing. By opening exhaust valve 155 during time period 156 (shown in Figs. 2 and air may be forced out of combustion chamber 124, thereby reducing a compression ratio of engine 110. Since piston 106 may be compressing the fluid in combustion chamber 124, some air may be forced through opened exhaust valve 155 and into exhaust manifold 150. The air may be pushed into conduit 160. At the end of the compression stroke, after exhaust valve 155 has closed, fuel injector 123 may inject fuel into combustion chamber 124. Fuel injector 123 may inject fuel at the end of the compression stroke, near TDC. Combustion may then occur within combustion chamber 124.

Controller 310 may control the opening/closing time and position of exhaust valve 155 at the end of the intake stroke and the first part of the compression stroke based on engine parameters such as, for example, a speed of engine 110, a load on engine 110, and/or when NOx production exceeds a certain threshold. Controller 310 may control exhaust valve 155 based on engine speed and engine load measurements input to controller 310 via electrical line 350 from sensor 360. Controller 310 may also control exhaust valve 155 based on measurements of NOx emissions input to controller 310 via electrical line 320 from sensor 340.

The air forced into conduit 160 during the compression (i.e., second) stroke may be directed through turbine 190. By directing air through turbine 190 during the compression stroke, the efficiency of turbocharger 180 and compressor 200 may be improved. The air may then be forced through conduit 240 and into filter assembly 260. This flow of air may also improve the combustion of soot particulates within filter assembly 260. Exhaust may pass from filter assembly 260 to the atmosphere. It is contemplated that the opening of exhaust valve 155 may be triggered by regeneration requirements, as opposed to requirements for reducing NOx, if desired.

Emissions reduction system 100 may help to reduce NOx emissions while maintaining normal operation of turbocharger 180 and filter assembly 260. Exhaust valve 155 may be opened during the compression stroke to help reduce the formulation of regulated NOx emissions during the ensuing power stroke. Also, by doing so, the efficiency of turbocharger 180 may be improved. Since the air released through exhaust valve 155 may be directed to filter assembly 260, combustion within filter assembly 260 may be improved. This may cause combustion of soot on the filter media of filter assembly 260, which may promote compliance with emissions standards by extending filter service life.

It will be apparent to those skilled in the art that various modifications and variations can be made to the disclosed emissions system. Other embodiments will be apparent to those skilled in the art from consideration of the specification and practice of the disclosed method and apparatus. It is intended that the specification and examples be considered as exemplary only, with a true scope being indicated by the following claims.

## Claims

1. An engine (110), comprising:
an engine block (104) at least partially forming a combustion chamber (124);
a piston (106) located to reciprocate within the combustion chamber;
an exhaust valve (155) fluidly connected to the combustion chamber;
a filter assembly (260) fluidly connected to the exhaust valve; and
a controller (310) configured to open the exhaust valve during a portion of an intake stroke of the piston and a portion of a compression stroke of the piston to reduce an amount of air available for combustion during an ensuing power stroke, wherein the exhaust valve opens at the end of the intake stroke and closes duping a first half of the compression stroke.

2. The engine of claim 1, further including a heater (265) located to heat the filter assembly, and a turbine (190) fluidly connected between the exhaust valve and the filter assembly.

3. The engine of claim 2, wherein the turbine and the filter assembly are configured to receive air from the combustion chamber during the compression stroke.

4. The engine of claim 3, wherein the air facilitates combustion of particulate matter within the filter assembly.

5. The engine of claim 1, wherein the exhaust valve opens near BDC and closes between 30 degrees and 70 degrees after BDC.

6. The engine of claim 5, wherein the fuel injector injects fuel near the end of the compression stroke, near TDC.

7. Method for controlling engine emissions in an engine provided with a filter assembly fluidly connected to an exhaust valve and comprising the steps of opening the exhaust valve during a portion of an intake stroke of the piston and a portion of a compression stroke of the piston for releasing intake air and to reduce an amount of air available for combustion during an ensuing power stroke, whereby the exhaust valve is opened after a majority of the intake stroke is complete and closed during a first half of the compression stroke.

8. The method of claim 7, wherein the released portion of the intake air facilitates regeneration of the filter device.

9. The method of claim 8, wherein releasing the portion of the intake air to the filter device includes passing the portion of the released air through a turbine (190) to improve turbine efficiency.

10. The method of claim 9, further including sensing at least one engine parameter, wherein the portion of intake air released to the filter device, varies based on a value of the sensed engine parameter.

## Patentansprüche

1. Motor (110), der Folgendes aufweist:
einen Motorblock (104), der zumindest teilweise eine Brennkammer (124) bildet;
einen Kolben (106), der angeordnet ist, um sich innerhalb der Brennkammer hin und her zu bewegen;
ein Auslassventil (155), welches strömungsmittelmäßig mit der Brennkammer verbunden ist;
eine Filteranordnung (260), die strömungsmittelmäßig mit dem Auslassventil verbunden ist; und
eine Steuervorrichtung (310), die konfiguriert ist, um das Auslassventil während eines Teils eines Einlasshubes des Kolbens und eines Teils eines Kompressionshubes des Kolbens zu öffnen, um die Menge an Luft zu verringern, die während eines darauf folgenden Leistungshubes zur Verbrennung verfügbar ist, wobei das Auslassventil sich am Ende des Einlasshubes öffnet und während einer ersten Hälfte des Kompressionshubes schließt.

2. Motor nach Anspruch 1, welcher weiter eine Heizung (256) aufweist, die angeordnet ist, um die Filteranordnung zu heizen, und eine Turbine (190), die strömungsmittelmäßig zwischen dem Auslassventil und der Filteranordnung angeschlossen ist.

3. Motor nach Anspruch 2, wobei die Turbine und die Filteranordnung konfiguriert sind, um Luft von der Brennkammer während des Kompressionshubes aufzunehmen.

4. Motor nach Anspruch 3, wobei die Luft die Verbrennung von Partikelstoffen in der Filteranordnung ermöglicht.

5. Motor nach Anspruch1, wobei das Auslassventil sich nahe dem unteren Totpunkt öffnet und zwischen 30 und 70 Grad nach dem unteren Totpunkt fließt.

6. Motor nach Anspruch 5, wobei die Brennstoffeinspritzvorrichtung Brennstoff nahe dem Ende des Kompressionshubes nahe dem oberen Totpunkt einspritzt.

7. Verfahren zur Steuerung von Motoremissionen in einem Motor, der mit einer Filteranordnung versehen ist, die strömungsmittelmäßig mit einem Auslassventil verbunden ist, wobei das Verfahren die Schritte aufweist, das Auslassventil während eines Teils eines Einlasshubes des Kolbens und eines Teils eines Kompressionshubes des Kolbens zu öffnen, um Einlassluft freizugeben und eine Menge an Luft zu verringern, die während eines darauf folgenden Leistungshubes zur Verbrennung verfügbar ist, wodurch das Auslassventil geöffnet wird, nachdem ein Hauptteil des Einlasshubes vollendet ist und während einer ersten Hälfte des Kompressionshubes geschlossen wird.

8. Verfahren nach Anspruch 7, wobei der freigegebene Teil der Einlassluft die Regeneration der Filtervorrichtung ermöglicht.

9. Verfahren nach Anspruch 8, wobei das Freigeben der Einlassluft zur Filtervorrichtung das Leiten des Teils der freigegebenen Luft durch eine Turbine (190) aufweist, um den Turbinenwirkungsgrad zu verbessern.

10. Verfahren nach Anspruch 9, welches weiter aufweist, zumindest einen Motorparameter abzufühlen, wobei der Teil der Einlassluft, der zur Filtervorrichtung freigegeben wird, basierend auf einem Wert des abgefühlten Motorparameters variiert.

## Revendications

1. Moteur (110) comprenant :
un bloc moteur (104) formant au moins partiellement une chambre de combustion (124) ;
un piston (106) disposé de façon à aller et venir dans la chambre de combustion ;
une soupape d'échappement (155) connectée en ce qui concerne les fluides à la chambre de combustion ;
un filtre (260) connecté en ce qui concerne les fluides à la soupape d'échappement ; et
un contrôleur (310) agencé pour ouvrir la soupape d'échappement pendant une partie de la course d'admission du piston et une partie de la course de compression du piston pour réduire la quantité d'air disponible pour la combustion pendant la course de combustion qui suit, la soupape d'échappement s'ouvrant à la fin de la course d'admission et se fermant pendant la première moitié de la course de compression.

2. Moteur selon la revendication 1, comprenant en outre un dispositif de chauffe (265) disposé de façon à chauffer le filtre, et une turbine (190) connectée en ce qui concerne les fluides entre la soupape d'échappement et le filtre.

3. Moteur selon la revendication 2, dans lequel la turbine et le filtre sont agencés pour recevoir de l'air provenant de la chambre de combustion pendant la course de compression.

4. Moteur selon la revendication 3, dans lequel l'air facilite la combustion de particules dans le filtre.

5. Moteur selon la revendication 1, dans lequel la soupape d'échappement s'ouvre à proximité du BDC et se ferme entre 30 degrés et 70 degrés après le BDC.

6. Moteur selon la revendication 5, dans lequel l'injecteur de carburant injecte du carburant à proximité de la fin de la course de compression, près du TDC.

7. Procédé pour contrôler les émissions du moteur dans un moteur muni d'un filtre connecté en ce qui concerne les fluides à une soupape d'échappement, et comprenant les étapes consistant à ouvrir la soupape d'échappement pendant une partie de la course d'admission du piston et une partie de la course de compression du piston pour libérer de l'air d'admission et pour réduire la quantité d'air disponible pour la combustion pendant la course de combustion qui suit, par lequel la soupape d'échappement est ouverte après qu'une proportion majoritaire de la course d'admission est achevée et fermée pendant la première moitié de la course de compression.

8. Procédé selon la revendication 7, dans lequel la partie d'air d'admission qui est libérée facilite la régénération du dispositif de filtrage.

9. Procédé selon la revendication 8, dans lequel la libération de la partie d'air d'admission vers le dispositif de filtrage inclut le passage de la partie d'air libérée à travers une turbine (190) pour améliorer l'efficacité de la turbine.

10. Procédé selon la revendication 9, comprenant en outre la détection d'au moins un paramètre du moteur, la partie d'air d'admission libérée vers le dispositif de filtrage variant sur la base de la valeur du paramètre de moteur détecté.
